# DEMANDE DE BREVET EUROPEEN

(11) **EP 1 223 762 A1**
(43) Date de publication de la demande: **17.07.2002**
(21) Numéro de dépôt: 01205013.4
(22) Date de dépôt: 19.12.2001
(51) Int. Cl.: H04N 7/26

(54) **Composition d'une image**

(30) Priorité: 28.12.2000 FR 0017206
(71) Demandeur: Koninklijke Philips Electronics N.V., 5621 BA Eindhoven (NL)
(72) Inventeur: Lafage, Anne, 75008 Paris (FR); Nguyen-Phuc, Lien, 75008 Paris (FR); Talayssat, Jacky, 75008 Paris (FR); Gobert, Jean, 75008 Paris (FR)
(74) Mandataire: Chaffraix, Jean

(57) **Abrégé**

Un ensemble d'échantillons d'image [IS] est établi à partir d'un ensemble de valeurs pour échantillons d'image [SV] et des paramètres géométriques [V1, V2, V3], de la façon suivante. Dans une étape d'initialisation [INIT], un cache [MSK] est généré à partir des paramètres géométriques [V1, V2, V3]. Dans une étape de projection [MAP], l'ensemble de valeurs pour échantillons d'image [SV] est projeté sur l'ensemble d'échantillons d'image [IS]. Le cache [MSK] intervient dans cette projection.

## Description

### DOMAINE TECHNIQUE

L'invention concerne la composition d'une image dans laquelle un ensemble d'échantillons d'image est établi à partir d'un ensemble de valeurs pour échantillons d'image et des paramètres géométriques. L'invention peut-être appliquée, par exemple, dans un système de composition d'image à partir d'une définition d'objet visuel telle qu'utilisée dans le domaine MPEG4 et d'une définition d'objet visuel telle qu'utilisée dans le domaine graphique 3D. (3D veut dire: trois dimensions; MPEG est l'abréviation de l'expression anglaise Motion Picture Expert Group.)

### ETAT DE LA TECHNIQUE ANTERIEURE

Dans le domaine graphique 3D, un objet visuel est typiquement représenté par un ensemble d'éléments graphiques sous forme de triangles. Un ensemble de paramètres définit les différentes caractéristiques d'un élément graphique, entre autre ses caractéristiques géométriques et sa texture. La texture peut-être définie sous forme d'un pointeur qui pointe vers un ensemble de valeurs pour échantillons d'image.

Dans le domaine graphique 3D, un ensemble d'échantillons d'image est typiquement établi en effectuant le procédé suivant pour chaque échantillon d'image. Premièrement, il est établi si l'échantillon d'image appartient à un certain élément graphique. Ceci implique des calculs à partir des paramètres géométriques de l'élément graphique. Deuxièmement, une valeur est assignée à l'échantillon d'image si celle-ci appartient à l'élément graphique concerné. Supposons que la texture de l'élément graphique est définie au moyen d'un pointeur. Dans ce cas, la valeur assignée à l'échantillon d'image est dérivée de l'ensemble de valeurs pour échantillons d'image auquel le pointeur pointe. La génération d'une image dans le domaine graphique 3D fait l'objet de la demande internationale de brevet publiée sous le numéro WO 99/06957 (numéro de dossier du demandeur PHB34176).

### EXPOSE DE L'INVENTION

Un but de l'invention est de permettre des implémentations à relativement faible coût.

Selon l'invention, un ensemble d'échantillons d'image est établi à partir d'un ensemble de valeurs pour échantillons d'image et des paramètres géométriques, de la façon suivante. Dans une étape d'initialisation, un cache est généré à partir des paramètres géométriques. Dans une étape de projection, l'ensemble de valeurs pour échantillons d'image est projeté sur l'ensemble d'échantillons d'image. Le cache intervient dans cette projection.

L'invention prend les aspects suivants en considération. La génération d'une image nécessite des circuits relativement rapides dans des applications à temps réel. Par exemple, supposons qu'une image doit être générée dans un délai de 20 ms, ce qui est assez typique pour une application à temps réel. Supposons en outre que l'image comprend 400000 échantillons. Dans ce cas, on demande aux circuits de fournir un échantillon d'image tous les 50 ns en moyenne; 50 ns étant l'intervalle entre deux échantillons d'image successifs.

Dans des applications graphiques 3D, un certain nombre de calculs sont nécessaires afin d'établir un échantillon d'image. Le procédé classique décrit précédemment demande un pipe-line de traitement (en anglais: processing pipeline) effectuant tous ces calculs. S'il y a un seul pipe-line de traitement, celui-ci doit effectuer tous calculs dans l'intervalle entre deux échantillons d'image. Par conséquent, le pipe-line de traitement doit être constitué de circuits relativement rapides. En général, il est vrai que plus un circuit est rapide, plus le circuit est onéreux.

En principe, il est possible de faire opérer plusieurs pipe-lines en parallèle. Par exemple, s'il y a deux pipe-lines de traitement en parallèle, chaque pipe-line de traitement doit effectuer tous calculs dans deux fois l'intervalle entre deux échantillons d'image. Donc, plusieurs pipe-lines de traitement en parallèle permettent l'utilisation de circuits moins rapides et donc moins chers. En revanche, s'il existe plusieurs pipe-lines de traitement en parallèle, ceci implique plus de circuits. Il y aura un certain nombre de pipe-lines de traitement pour lequel le coût total sera le plus faible.

Selon l'invention, la composition d'une image est effectuée en deux étapes: l'étape d'initialisation et l'étape de projection décrites précédemment. L'étape d'initialisation couvre une partie des calculs nécessaires pour la génération d'une image, l'étape de projection couvre l'autre partie des calculs. Chaque étape demande son propre pipe-line de traitement. La cascade de ces deux pipe-lines distincts est l'équivalent du pipe-line de traitement que nécessite le procédé classique. Le pipe-line pour l'étape d'initialisation et le pipe-line de l'étape de projection peuvent opérer en parallèle. Pendant l'étape de projection est effectuée pour une image, l'étape d'initialisation peut être effectuée pour l'image suivante. Par conséquent, l'invention permet l'utilisation de circuits moins rapides sans que ceci nécessite une doublure de circuits. Par conséquent l'invention permet des implémentations à relativement faible coût.

Ces aspects de l'invention ainsi que d'autres aspects seront décrits plus en détail en référence aux Figures suivantes.

### BREVE DESCRIPTION DES FIGURES

La Figure 1 est un diagramme conceptuel illustrant des caractéristiques de base décrites précédemment;

La Figure 2 est un diagramme conceptuel illustrant des caractéristiques additionnelles;

La Figure 3 est un diagramme de bloc illustrant un dispositif de composition d'image;

La Figure 4 est un diagramme conceptuel illustrant la composition d'une image;

La Figure 5 est un diagramme conceptuel illustrant une tuile et une tuile inverse associée à celle-ci;

La Figure 6 est un diagramme conceptuel illustrant la génération d'une tuile;

Les Figures 7a, 7b et 7c sont des diagrammes conceptuels illustrant la génération de valeurs d'entrée booléennes;

Les Figures 8a, 8b et 8c sont des diagrammes conceptuels illustrant la génération de valeurs d'entrée booléennes;

La Figure 9 est un diagramme conceptuel illustrant l'établissement d'une valeur de contribution;

La Figure 10 est un diagramme de bloc illustrant un processeur qui fait partie du dispositif de composition d'image illustré à la Figure 3;

La Figure 11 est un diagramme conceptuel illustrant le fonctionnement d'un circuit de contrôle interne qui fait partie du processeur illustré à la Figure 10;

La Figure 12 est un diagramme conceptuel illustrant une surface d'un élément graphique 3D;

La Figure 13 est un diagramme de bloc illustrant quelques détails d'un formateur de forme qui fait partie du processeur illustré à la Figure 10;

Les Figures 14a, 14b, 14c et 14d sont des diagrammes conceptuels illustrant le fonctionnement du formateur de forme;

La Figure 15 est un diagramme conceptuel illustrant une conversion de format dans lequel les valeurs d'entrées binaires jouent un rôle; et

La Figure 16 est un tableau illustrant le fonctionnement du processeur illustré à la Figure 10.

### MODES DE REALISATION DE L'INVENTION

Les remarques suivantes concernent les signes de référence. Des entités similaires sont désignées par une référence par lettres identique dans toutes les figures. Plusieurs entités similaires peuvent apparaître dans une seule figure. Dans ce cas, un chiffre ou un suffixe est ajouté à la référence par lettres afin de distinguer des entités similaires. Le chiffre ou le suffixe peut être omis pour des raisons de convenance. Ceci s'applique pour la description ainsi que pour les revendications.

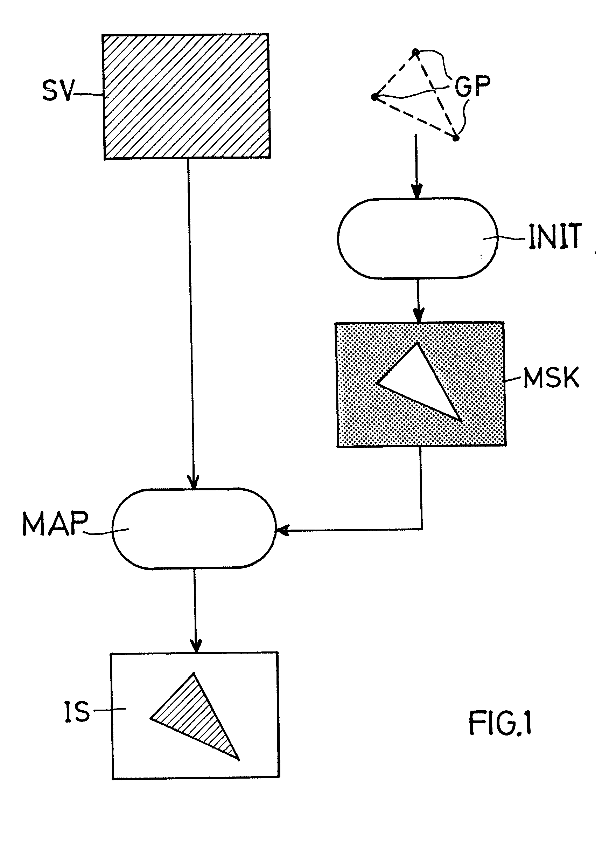

La Figure 1 illustre les caractéristiques de base décrites précédemment. Un ensemble d'échantillons d'image [IS] est établi à partir d'un ensemble de valeurs pour échantillons d'image [SV] et des paramètres géométriques [GP], de la façon suivante. Dans une étape d'initialisation [INIT], un cache [MSK] est généré à partir des paramètres géométriques [GP]. Dans une étape de projection [MAP], l'ensemble de valeurs pour échantillons d'image [SV] est projeté sur l'ensemble d'échantillons d'image [IS]. Le cache [MSK] intervient dans cette projection.

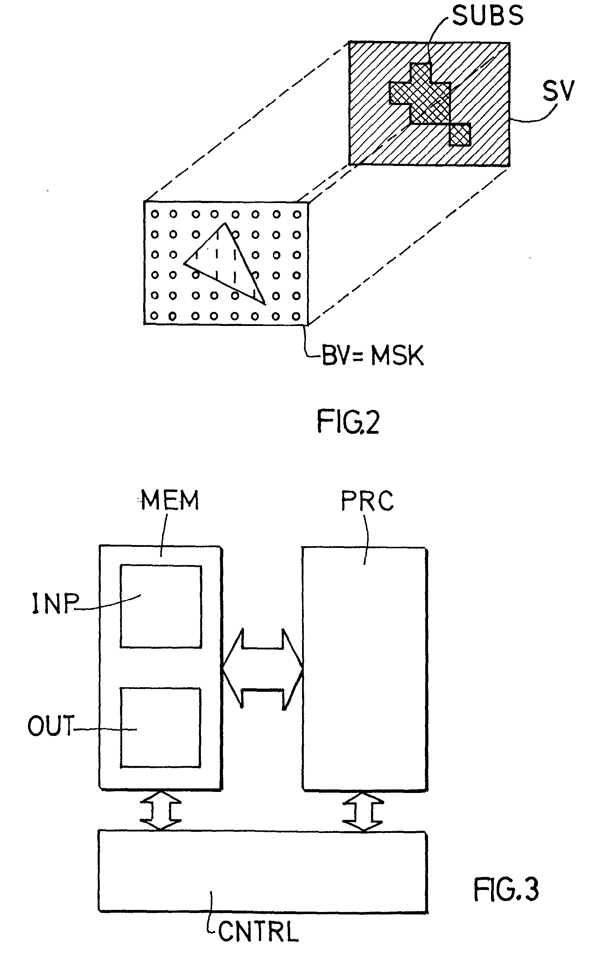

La Figure 2 illustre des caractéristiques additionnelles. Le cache [MSK] est sous forme d'un ensemble de valeurs booléennes [BV]. L'ensemble de valeurs booléennes [BV] est associé à l'ensemble de valeurs pour échantillons d'image [SV] et définit un sous-ensemble [SUBS] dans celui-ci. Ainsi, l'ensemble de valeurs booléennes [BV] empêche la projection des valeurs pour échantillons d'image qui n'appartiennent pas au sous-ensemble [SUBS].

Les aspects suivants ont été pris en considération à l'égard des caractéristiques illustrées à la Figure 2. Il y a plusieurs façons de définir un objet visuel. Selon la norme MPEG4, un objet visuel est défini au moyen d'un ensemble de valeurs pour échantillons d'image qui comprend des valeurs booléennes. Les valeurs booléennes définissent la forme de l'objet visuel. Dans le domaine graphique 3D, un objet visuel est défini au moyen d'éléments graphiques sous forme de triangles. Les caractéristiques géométriques d'un élément 3D peuvent, en quelque sorte, être considérées comme une définition de la forme de l'élément graphique 3D.

Selon les caractéristiques illustrées à la Figure 2, un ensemble de valeurs booléennes est généré à partir des paramètres géométriques d'un élément graphique 3D. Cette définition de forme est donc, en effet, traduit en une définition de forme selon la norme MPEG4. Ceci permet de réaliser des effets graphiques d'une façon relativement simple. Par exemple, considérons l'effet graphique suivant. L'objet visuel MPEG4 est projeté sur l'objet visuel 3D en rognant les parties de l'objet visuel MPEG4 qui dépassent l'objet visuel 3D. Afin de réaliser cet effet graphique, il suffit d'appliquer une fonction ET (en anglais: AND) aux valeurs booléennes définissant la forme de l'objet visuel MPEG4 et les valeurs booléennes obtenu par traduction d'un ou plusieurs éléments graphiques 3D.

Un autre avantage des caractéristiques illustrées à la Figure 2 est lié aux aspects suivants. Pour composer une image, un ensemble de valeurs pour échantillons d'image est projeté sur un ensemble d'échantillons d'image. La projection peut impliquer une transformation géométrique. Dans ce cas, la valeur assignée à un échantillon d'image est typiquement une combinaison pondérée de plusieurs valeurs provenant de l'ensemble de valeurs pour échantillons d'image. Une telle projection peut être réalisée au moyen d'un filtre qui, en effet, parcourt l'ensemble de valeurs pour échantillons d'image.

Plus précisément, le filtre a un noyau. Le noyau sélectionne, en fonction de sa position, un groupement de valeurs pour échantillons d'image. Selon un procédé classique, le noyau parcourt l'ensemble de valeurs pour échantillon d'image en lui déplaçant unité par unité. Pour chaque position différente du noyau, le filtre calcule une combinaison pondérée des valeurs qui se trouvent dans le noyau. La combinaison pondérée est attribuée à un échantillon d'image à condition que celui-ci appartienne à l'élément graphique concerné.

L'ensemble de valeurs booléennes illustré à la Figure 2 indique quelles valeurs échantillons d'image seront projetées et quelles ne seront pas projetées. Ainsi, l'invention permet de contrôler le filtre afin que celui-ci, en effet, saute des positions dans l'ensemble de valeurs pour échantillons d'image pour lesquelles une projection n'a pas lieu. Par conséquent, les caractéristiques illustrées à la Figure 2 permettent un filtrage efficace ce qui veut dire que moins d'opérations sont nécessaires pour faire la projection. Par conséquent, les caractéristiques illustrées à la Figure 2 permettent l'utilisation de circuits moins rapides et, par conséquent, moins chers.

Un encore autre avantage des caractéristiques illustrées à la Figure 2 est lié aux aspects suivants. L'implémentation des caractéristiques illustrées à la Figure 1 nécessite une mémoire pour stocker temporairement le cache [MSK]. En principe, ceci est désavantageux en termes de coût. Selon les caractéristiques illustrées à la Figure 2, le cache [MSK] est sous forme d'un ensemble de valeurs booléennes. Dans ce cas, il suffit de stocker un bit par échantillon d'image. Par conséquent, la mémoire en question est de relativement faible taille et donc relativement bon marché.

Les caractéristiques illustrées dans les Figures 1 et 2 peuvent être appliquées, par exemple, dans un système pour composer une image à partir d'une définition d'objet visuel telle qu'utilisée dans le domaine MPEG4 et d'une définition d'objet visuel telle qu'utilisée dans le domaine graphique 3D. Il a déjà été mentionné que, dans le domaine graphique 3D, un objet visuel est typiquement représenté par un ensemble d'éléments graphiques sous forme de triangles. Un ensemble de paramètres définit les différentes caractéristiques d'un élément graphique, entre autre ses caractéristiques géométriques et sa texture.

Dans le domaine MPEG4, la définition d'un objet visuel est typiquement sous forme d'un ensemble de valeurs pour échantillons d'image. Il existe différents types de valeurs pour échantillons d'image: des valeurs de luminance (Y), des valeurs de chrominance (U, V), des valeurs d'opacité (A) et des valeurs booléennes (S). Les valeurs A (opacité) servent à superposer l'objet visuel concerné sur un autre objet visuel ou un fond (en anglais: background). Les valeurs S (booléennes) constituent, en effet, une définition de la forme de l'objet visuel concerné tandis que les autres valeurs constituent une définition de la texture. Une valeur provenant de l'ensemble de valeurs pour échantillons d'image est nommée valeur d'origine dans la suite.

La Figure 3 illustre un dispositif de composition d'image. Le dispositif comprend une mémoire [MEM], un processeur [PRC] et un contrôleur [CNTRL]. La mémoire [MEM] comprend une section d'entrée [INP] et une section de sortie [OUT]. La section d'entrée [INP] sert pour stocker une ou plusieurs définitions d'objet visuel. Par exemple, la section d'entrée [INP] peut contenir des données issues d'un décodage selon la norme MPEG4 et des données graphiques 3D. La section d'entrée [INP] contient donc typiquement un ou plusieurs ensembles de valeurs pour échantillons d'image. La section de sortie [OUT] sert pour temporairement stocker une image composée. Cette image peut-être lue, par exemple, par un dispositif d'affichage afin d'afficher l'image sur un écran.

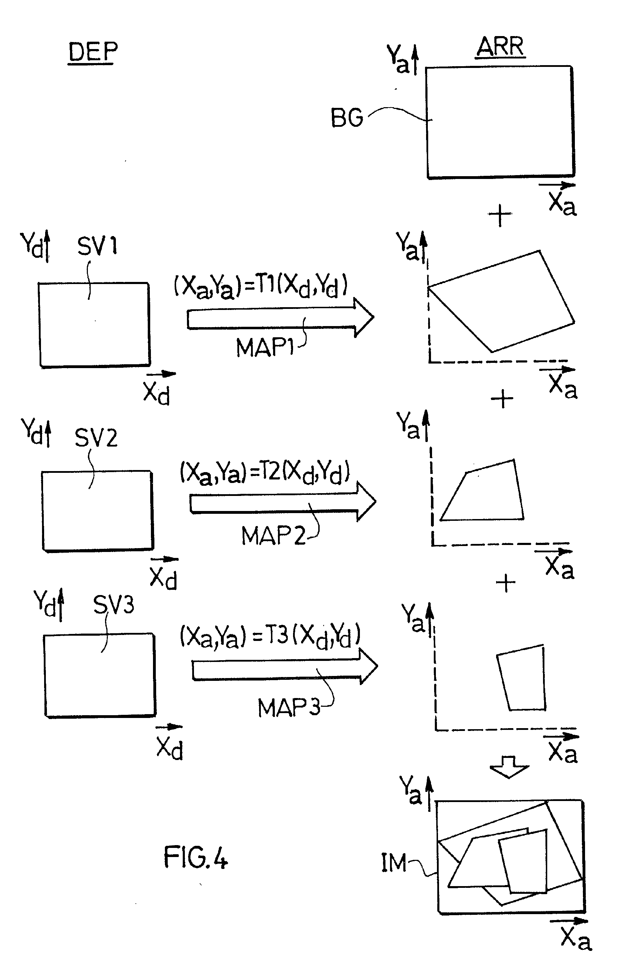

La Figure 4 illustre d'une façon conceptuelle, comment le dispositif illustré à la Figure 3 compose une image [IM] à partir de trois ensembles de valeurs pour échantillon d'image [SV1, SV2, SV3].

Les trois ensembles de valeurs pour échantillons d'image [SV] se trouvent, en effet, dans un espace 2D nommé espace de départ [DEP] dans la suite. Chaque valeur d'origine a une certaine position dans l'espace de départ [DEP]. La position est définie par des coordonnées (x_{d}, y_{d}) dans la dimension horizontale et verticale. Ces coordonnées (x_{d}, y_{d}) seront nommées coordonnées de départ dans la suite. Le processeur [PRC] illustré à la Figure 3 associe des coordonnées de départ (x_{d}, y_{d}) à une adresse de mémoire prévue pour stocker une valeur d'origine. Le processeur [PRC] est donc à même d'établir l'adresse sous laquelle une valeur d'origine est stockée à partir des coordonnées de départ (x_{d}, y_{d}).

L'image composée [IM] se trouve, en effet, dans un espace 2D qui sera nommé espace d'arrivée [ARR] dans la suite. Chaque échantillon d'image a une certaine position dans l'espace d'arrivée [ARR]. La position est définie par des coordonnées (xₐ, yₐ) dans la dimension horizontale et verticale. Ces coordonnées (xₐ, yₐ) seront nommées coordonnées d'arrivée dans la suite. Le contrôleur [CNTRL] illustré à la Figure 3 associe des coordonnées d'arrivée (xₐ, yₐ) à une adresse de mémoire prévue pour stocker un échantillon d'image. Le contrôleur [CNTRL] est donc à même d'établir l'adresse sous laquelle un échantillon d'image doit être stocké à partir des coordonnées d'arrivée (xₐ, yₐ).

Le processeur [PRC] projète [MAP] chaque ensemble de valeurs pour échantillons d'image [SV] concerné, de l'espace de départ [DEP] vers l'espace d'arrivée [ARR]. Les projections [MAP] illustrées à la Figure 4 impliquent une transformation géométrique [T]. En outre, le processeur [PRC] superpose [BLND] les ensembles de valeurs pour échantillons d'image projetés et un fond [BG]. Cela veut dire que plusieurs ensembles de valeurs pour échantillons d'image peuvent contribuer à un échantillon d'image.

Dans la Figure 4, les ensembles de valeurs pour échantillons d'image [SV] sont représentés par des rectangles. Ceci caractérise assez bien leur structure typique. Toutefois, le processeur [PRC] peut, en effet, rogner un rectangle afin d'obtenir une autre forme qui sera projeté de l'espace de départ vers l'espace d'arrivé. Par exemple, le processeur [PRC] peut rogner un rectangle à partir des paramètres géométriques appartenant à la définition d'un objet visuel 3D. Dans ce cas, le résultat sera un triangle que le processeur [PRC] projettera de l'espace de départ sur l'espace d'arrivée. En tout cas, rogner un rectangle correspond à définir un sous-ensemble dans l'ensemble de valeurs pour échantillons d'image.

Le dispositif illustré à la Figure 3 compose une image par génération successive de blocs d'échantillons d'image. Un bloc d'échantillon d'image sera nommé une "tuile" dans la suite. Une tuile peut comprendre, par exemple, 16 fois 16 échantillons d'image. Le processeur [PRC] génère les tuiles sous contrôle du contrôleur [CNTRL]. Le contrôleur [CNTRL] établie des paramètres de contrôle pour chaque tuile avant que le processeur [PRC] commence à générer des tuiles. Ceci constitue une phase de préparation. Une fois que les paramètres de contrôle sont établis, le contrôleur [CNTRL] applique les paramètres de contrôle successivement au processeur [PRC] afin que celui génère successivement les tuiles. Ceci constitue une phase d'exécution.

Plus précisément, dans la phase de préparation, le contrôleur [CNTRL] établie d'abord une liste des tuiles qui constituent l'image composée. Pour chaque tuile, le contrôleur [CNTRL] établit une liste d'ensembles de valeurs d'échantillons d'image qui contribuent à la tuile. Pour chacun de ces ensembles, le contrôleur [CNTRL] calcule une tuile inverse. La tuile inverse est obtenue par une transformation géométrique inverse de la tuile. La transformation géométrique inverse est l'inverse de la transformation géométrique selon laquelle l'ensemble de valeurs pour échantillons d'image concerné est projeté comme illustré à la Figure 4.

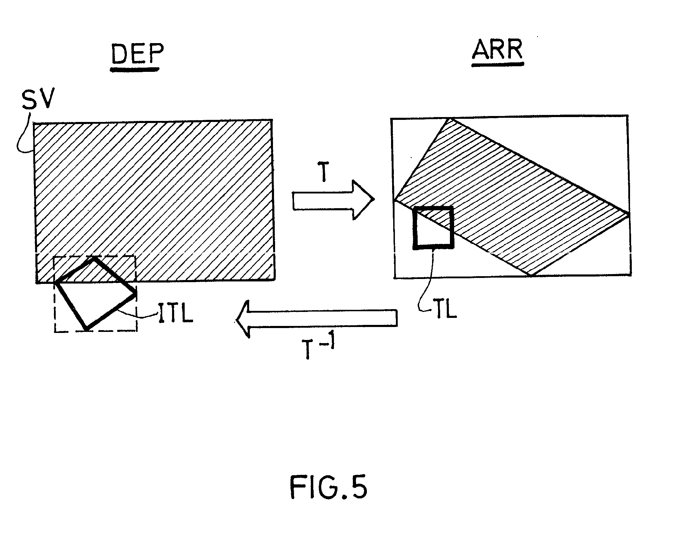

La Figure 5 illustre une tuile [TL] et une tuile inverse [ITL] associée à celle-ci. La tuile [TL] se trouve dans l'espace d'arrivée [ARR] tandis que la tuile inverse [ITL] se trouve dans l'espace de départ [DEP]. La Figure 5 illustre un ensemble de valeurs pour échantillons image [SV] dans l'espace de départ [DEP] et la projection de cet ensemble [SV] dans l'espace d'arrivée [ARR]. Cette projection implique une transformation géométrique [T]. La tuile inverse [ITL] est obtenue en appliquant la transformation géométrique inverse [T⁻¹] à la tuile [TL]. La tuile inverse [ITL] illustrée à la Figure 5 est particulier dans le sens qu'elle couvre un bord de l'ensemble de valeurs pour échantillons d'image.

Le contrôleur [CNTRL] établit un cadre rectangulaire dans l'espace de départ qui encadre la tuile inverse [ITL]. Ce cadre est illustré à la Figure 5 par tirets. Au moment utile, le contrôleur [CNTRL] transfert au processeur [PRC] une définition du cadre rectangulaire sous forme de paramètres de contrôle. Ces paramètres de contrôle comprennent également une information sur la présence d'un bord, s'il y en a. À cet égard il faut noter qu'il y a plusieurs types de bord. Un bord peut être, par exemple, un bord de l'ensemble de valeurs pour échantillons d'image comme illustré à la Figure 5. Un bord peut également être autre un bord d'un triangle issu de la définition d'un élément graphique 3D.

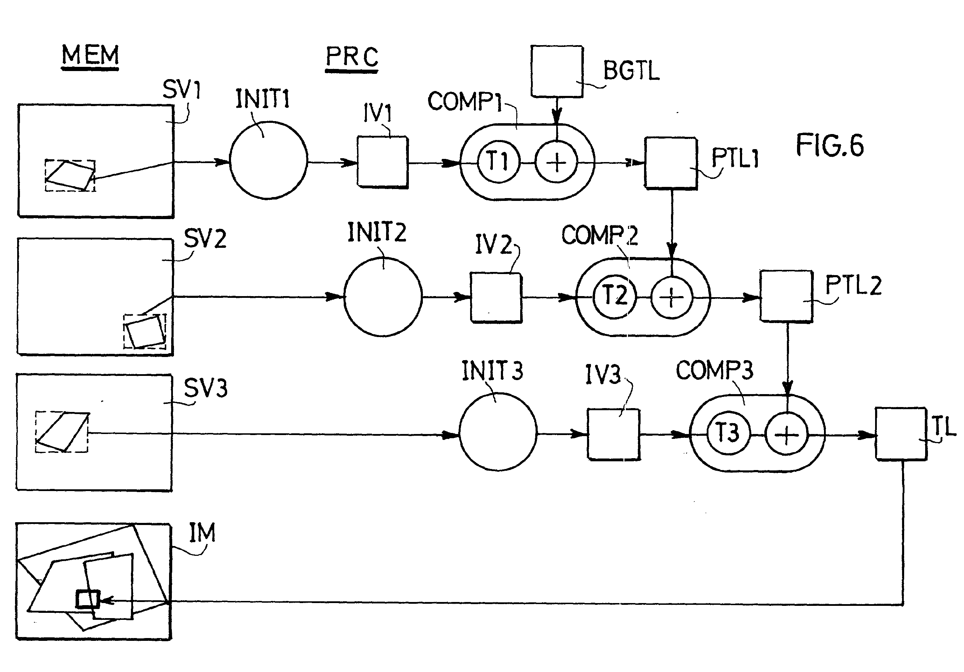

La Figure 6 illustre comment le processeur [PRC] illustré à la Figure 3 génère une tuile [TL]. La tuile [TL] est générée à partir de trois ensembles de valeurs pour échantillons d'image [SV] numérotés du premier au troisième [SV1, SV2, SV3]. Les trois ensembles de valeurs pour échantillons d'image [SV] trouvent dans la mémoire [MEM] illustrée à la Figure 3.

Le processeur [PRC] effectue une étape d'initialisation [INIT] pour chaque ensemble de valeurs pour échantillons d'image [SV] qui contribue à la tuile. L'étape d'initialisation [INIT] donne lieu a un bloc de valeurs d'entrée [IV]. Ainsi, dans une première étape d'initialisation [INIT1], le processeur [PRC] crée un premier bloc de valeurs d'entrée [IV1] à partir du premier ensemble de valeurs pour échantillon d'image [SV1]. Dans une deuxième étape d'initialisation [INIT2], il crée un deuxième bloc de valeurs d'entrée [IV2] à partir du deuxième ensemble de valeurs pour échantillon d'image [SV2]. Dans une troisième étape d'initialisation [INIT3], le processeur [PRC] crée un troisième bloc de valeurs d'entrée [IV3] à partir du troisième ensemble de valeurs pour échantillon d'image [SV3], Un bloc de valeurs d'entrée [IV] représente une partie de l'ensemble de valeurs pour échantillon d'image [SV] concerné nécessaire pour générer la tuile [TL]. Les étapes d'initialisation [INIT] sont décrites plus en détail dans la suite.

Les blocs de valeurs d'entrée [IV] se trouvent dans l'espace de départ [DEP] illustré à la Figure 4 et 5. Chaque valeur d'entrée a des coordonnées de départ (x_{d}, y_{d}) définissant sa position dans l'espace de départ. Il existe différents types de valeurs d'entrée: des valeurs d'entrée de luminance (Y), des valeurs d'entrée de chrominance (U, V), des valeurs d'entrée d'opacité (A) et des valeurs d'entrée booléennes (S). Le format d'un bloc de valeurs d'entrée [IV] est 4:4:4. Cela veut dire que pour chaque valeur d'entrée Y ayant une certaine position (x_{d}, y_{d}) dans l'espace de départ, il existe une valeur d'entrée U et une valeur d'entrée V ayant la même position (x_{d}, y_{d}). Il existe en outre une valeur d'entrée A (opacité) et une valeur d'entrée booléenne ayant cette position (x_{d}, y_{d}). La valeur d'entrée booléenne indique si les valeurs d'entrée Y, U, V et A concernées doivent être prises en compte dans l'étape de composition [COMP] qui suit l'étape d'initialisation [INIT]. Cela veut dire, la valeur d'entrée booléenne indique si les valeurs d'entrée Y, U, V et A concernées sont valides ou non.

Le processeur [PRC] effectue une étape de composition [COMP] pour chaque bloc de valeurs d'entrée [IV]. Dans chaque étape de composition [COMP], le processeur [PRC] projète, en effet, une partie du bloc de valeurs d'entrée [IV] concerné de l'espace de départ [DEP] vers l'espace d'arrivée [ARR]. Cette projection implique la transformation géométrique [T] concernée telle qu'illustrée à la Figure 4. Dans la première étape de composition [COMP1], le processeur [PRC] projète, en effet, une partie du premier bloc de valeurs d'entrée [IV1] et superpose le résultat de cette projection au-dessus une tuile de fond [BGTL]. Ainsi, la première étape de composition [COMP1] donne lieu à une première tuile intermédiaire [PTL1]. Dans la deuxième étape de composition [COMP2], le processeur [PRC] projète, en effet, une partie du deuxième bloc de valeurs d'entrée [IV2] et superpose le résultat de cette projection au-dessus la première tuile intermédiaire [PTL1]. Ainsi, la deuxième étape de composition [COMP2] donne lieu à une deuxième tuile intermédiaire [PTL2]. Dans la troisième étape de composition [COMP3], le processeur [PRC] projète, en effet, une partie du troisième bloc de valeurs d'entrée [IV3] et superpose le résultat de cette projection au-dessus la deuxième tuile intermédiaire [PTL2]. Ainsi, la troisième étape de composition [COMP3] donne lieu à la tuile [TL]. Les étapes de compositions [COMP] sont décrites plus en détail dans la suite.

Ce qui suit décrit plus en détail comment, dans une étape d'initialisation [INIT], le processeur [PRC] crée un bloc de valeurs d'entrée [IV]. Le processeur effectue [PRC] une lecture dans la mémoire [MEM]. Cette lecture ne concerne qu'une zone rectangulaire dans l'espace de départ qui encadre la tuile inverse [ITL] concernée. Cette zone rectangulaire est nommée zone de lecture dans la suite. Elle est illustrée au moyen de tirets dans la Figure 6.

Supposons que le format de l'ensemble de valeurs pour échantillons d'image concerné [IVS] soit 4:4:4. Supposons en outre que la zone de lecture est suffisamment petite pour que le processeur [PRC] puisse temporairement stocker toutes les valeurs d'origine qui se trouvent dans la zone de lecture. Dans ce cas, les valeurs d'entrée Y, U, V et A sont respectivement des copies des valeurs d'origine Y, U, V et A dans la zone de lecture. En effet, le processeur [PRC] copie la zone de lecture dans une mémoire interne en ce qui concerne les valeurs d'origine Y, U, V et A.

Le processeur [PRC] effectue une conversion de format si le format de l'ensemble de valeurs pour échantillons d'image concerné [IVS] est autre que 4:4:4. Par exemple, supposons que le format de l'ensemble de valeurs pour échantillons [IVS] d'image soit 4:2:2. Dans ce cas, le processeur [PRC] crée, en effet, une valeur U supplémentaire entre deux valeurs d'origine U voisines. Il crée également une valeur V supplémentaire entre deux valeurs d'origine V voisines. Donc, une conversion de format 4:2:2 vers 4:4:4 implique une interpolation entre deux valeurs d'origine U voisines et une interpolation entre deux valeurs d'origine V voisines. Si le format de l'ensemble de valeurs pour échantillons d'image [IVS] est 4:2:0, le processeur [PRC] effectue une interpolation entre quatre valeurs d'origine U voisines et une interpolation entre quatre valeurs d'origine V voisines.

Le processeur [PRC] contient une mémoire interne pour temporairement stocker un bloc de valeurs d'entrée [IV]. Cette mémoire interne est relativement petite. Il peut arriver que la zone de lecture illustrée à la Figure 6 soit tellement grande que la mémoire interne ne peut pas stocker toutes les valeurs d'origine qui se trouvent dans la zone de lecture. Dans ce cas, le processeur [PRC] effectue, en effet, une compression de valeurs. Le processeur [PRC] calcule la moyenne de N valeurs d'origine Y consécutives afin d'obtenir une valeur d'entrée Y, N étant un entier représentant un facteur de compression. Si nécessaire, le processeur effectue une compression de valeurs similaire à l'égard des valeurs d'origine U, V et A.

Il peut arriver que, le processeur [PRC] doive effectuer une conversion de format et, en même temps, une compression de valeurs. Dans ce cas, le processeur [PRC] adapte l'interpolation décrite précédemment en fonction du facteur de compression (N). Par exemple, supposons que le facteur de compression (N) soit 2 et que le format de stockage dans la mémoire [MEM] soit 4:2:2. Dans ce cas, le processeur [PRC] n'effectue pas d'interpolation entre deux valeurs d'origine. La résolution des valeurs d'origine U et V dans l'ensemble de valeurs pour échantillons d'image [IVS] est déjà bonne: elle est égale à la résolution obtenue par la compression des valeurs d'origine Y.

Le processeur [PRC] génère les valeurs d'entrée booléennes à partir d'un ou plusieurs définitions de bords, s'il y en a. Si l'ensemble de valeurs pour échantillons d'image concerné comprend des valeurs d'origine S, le processeur [PRC] prend également en compte les valeurs d'origine S dans la zone de lecture.

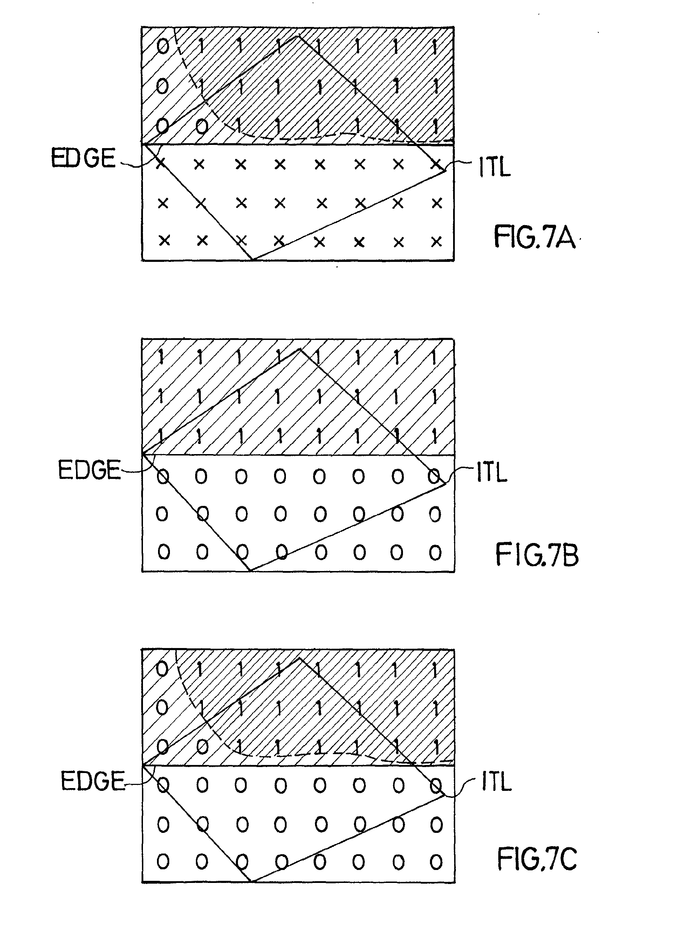

Les Figures 7a, 7b et 7c illustrent d'une façon conceptuelle la génération de valeurs d'entrée booléennes. Chaque Figure illustre une tuile inverse [ITL] qui correspond à celle déjà illustrée à la Figure 5. La tuile inverse [ITL] couvre un bord [EDGE] de l'ensemble de valeurs pour échantillon d'image concernée. Un rectangle encadre la tuile inverse [ITL]. Il est supposé que le cadre rectangulaire comprenne 8 fois 6 positions dans l'espace de départ afin de simplifier les Figures.

La Figure 7a illustre des valeurs booléennes établies à partir de l'ensemble de valeurs pour échantillon d'image concerné. L'ensemble de valeurs pour échantillon d'image contient des valeurs d'origine S pour les positions au-dessus le bord [EDGE]. Il est rappelé que ces valeurs d'origine S constitue une définition de forme d'un objet visuel. La Figure 7a illustre une partie du contour de l'objet visuel au moyen de tirets. L'ensemble de valeurs pour échantillon d'image ne contient pas de valeurs d'origine S pour les positions en dessous le bord [EDGE]. Par conséquent, les valeurs booléennes en dessous le bord [EDGE] ont une valeur arbitraire (en anglais: do-not-care values) [x].

La Figure 7b illustre des valeurs booléennes établies à partir du bord [EDGE] de l'ensemble de valeurs pour échantillon d'image. Les valeurs booléennes au-dessus le bord [EDGE] sont égale à un (1). Elles indiquent qu'il y a des valeurs d'origine pour ces positions. En revanche, les valeurs booléennes en dessous le bord [EDGE] sont égale à zéro (0). Elles indiquent qu'il n'y a pas des valeurs d'origine pour ces positions.

La Figure 7c illustre des valeurs booléennes obtenues en combinant les Figures 7a et 7b selon la fonction logique ET (en anglais: AND). Cela veut dire, une valeur booléenne illustrée dans la Figure 7c est le résultat d'une combinaison ET de la valeur booléenne ayant la même position dans la Figure 7a et celle dans la Figure 7b. Les valeurs booléennes illustrées à la Figure 7c représentent les valeurs d'entrée booléennes.

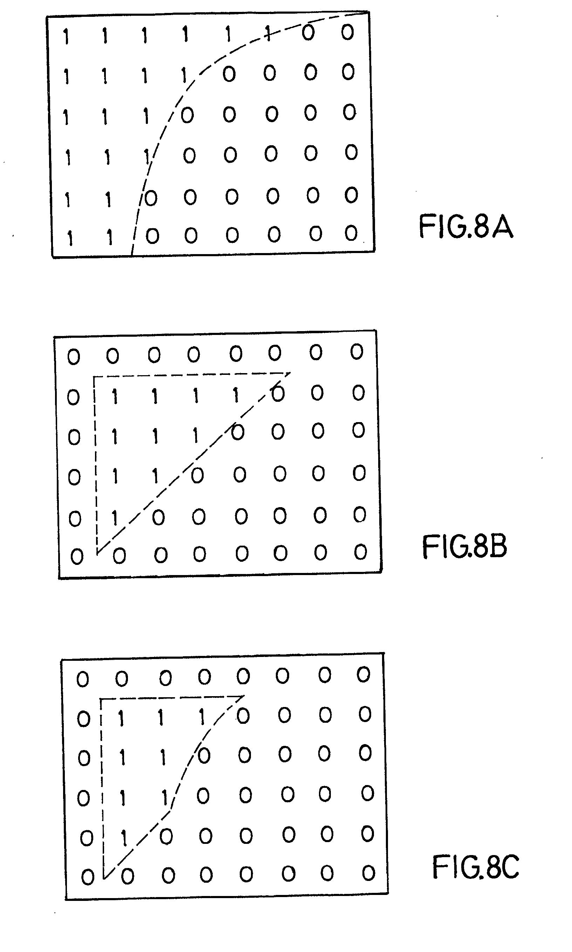

Les Figures 8a, 8b et 8c illustrent une autre génération de valeurs d'entrées booléennes. Ces Figures ne montrent pas une tuile inverse car, en principe, celle-ci ne joue pas de rôle. Il est supposé que le cadre rectangulaire ne comprenne pas un bord de l'ensemble de valeurs pour échantillons d'image concerné. Autrement dit, le cadre rectangulaire se trouve complètement dans l'ensemble de valeurs pour échantillons d'image concerné.

La Figure 8a illustre des valeurs booléennes établies à partir de l'ensemble de valeurs pour échantillon d'image concerné. L'ensemble de valeurs pour échantillon d'image contient des valeurs d'origine S pour toutes positions dans le cadre rectangulaire. Il est à nouveau rappelé ces valeurs d'origine S constitue une définition de forme d'un objet visuel. La Figure 8a illustre une partie du contour de l'objet visuel au moyen de tirets.

La Figure 8b illustre des valeurs booléennes établies à partir de plusieurs définitions de bord. Ces définitions de bords proviennent des paramètres géométriques d'un élément graphique 3D. Il existe un premier bord [EDGE1], un deuxième bord [EDGE2] et un troisième bord [EDGE3]. Ces bords [EDGE] définissent un triangle [TRNGL]. Chaque valeur booléenne dans le triangle [TRNGL] est égale à un (1). Chaque valeur booléenne en dehors du triangle [TRNGL] est égale à zéro (0).

La Figure 8c illustre des valeurs booléennes obtenues en combinant les Figures 8a et 8b selon la fonction logique ET (en anglais: AND). Cela veut dire, une valeur booléenne illustrée dans la Figure 8c est le résultat d'une combinaison ET de la valeur booléenne ayant la même position dans la Figure 8a et celle dans la Figure 8b. Les valeurs booléennes illustrées à la Figure 8c représentent les valeurs d'entrée booléennes. Dans cet exemple, un objet visuel dont la forme est définie au moyen de valeurs d'origine S, est rogné au moyen de plusieurs définitions de bord appartenant à un élément graphique 3D.

Ce qui suit décrit plus en détail les opérations qu'effectue le processeur [PRC] dans les étapes de composition [COMP]. Dans chaque étape de composition [COMP], le processeur [PRC] effectue, en effet, un balayage de la zone dans l'espace d'arrivée [ARR] qu'occupe la tuile [TL] comme illustré à la Figure 5. Cette zone comprend plusieurs positions caractérisées par des coordonnées d'arrivée (xₐ, yₐ) en entier. La tuile [TL] comprend un échantillon d'image Y, un échantillon d'image U et un échantillon d'image V pour chaque position (xₐ, yₐ). Pour chaque position (xₐ, yₐ), le processeur [PRC] établit une valeur de contribution Y, une valeur de contribution U, une valeur de contribution V, une valeur de contribution A et une valeur de contribution S. Le processeur [PRC] établit ces valeurs de contribution à partir du bloc de valeurs d'entrée concerné [IV].

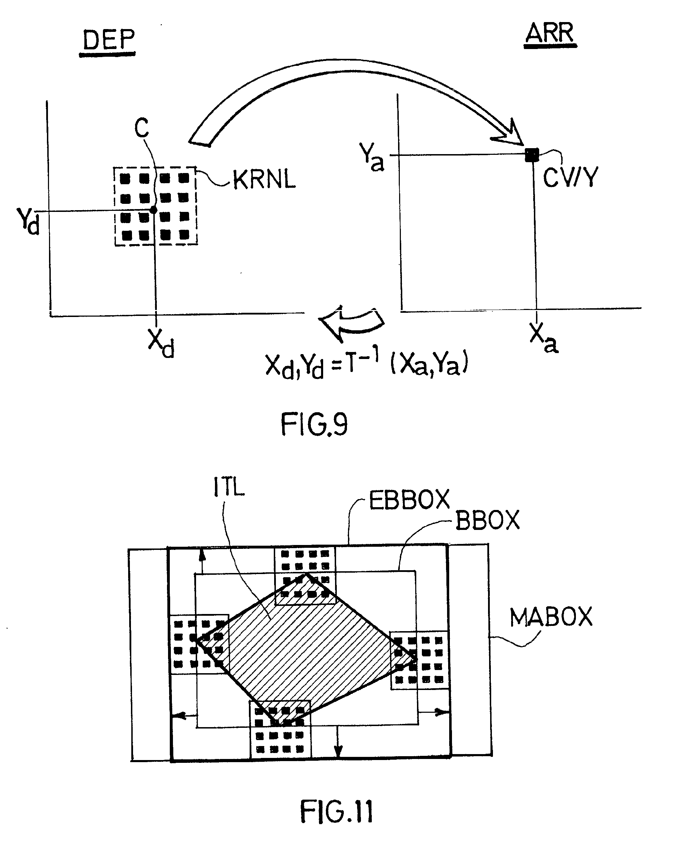

La Figure 9 illustre comment le processeur [PRC] établit une valeur de contribution Y [CV/Y] pour une position (xₐ, yₐ) dans l'espace d'arrivée [ARR]. Le processeur [PRC] calcule des coordonnées de départ (x_{d}, y_{d}) à partir des coordonnées d'arrivée (xₐ, yₐ) de la position concernée. Les coordonnées de départ (x_{d}, y_{d}) sont obtenues en appliquant l'inverse de la transformation géométrique concernée [T⁻¹] aux coordonnées d'arrivée (xₐ, yₐ). Les coordonnées d'arrivée (xₐ, yₐ) sont des entiers tandis que les coordonnées de départ (x_{d}, y_{d}) peuvent être des nombres rationnels. Cela veut dire que les coordonnées de départ (x_{d}, y_{d}) peuvent être décomposées en une partie en entier (x_{d}', y_{d}') et une partie fractionnelle (Δx_{d}, Δy_{d}). La relation suivante s'applique: (x_{d}, y_{d}) = (x_{d}', y_{d}') + (Δx_{d}, Δy_{d}), x_{d}' et y_{d}' étant des nombres entiers, Δx_{d} et Δy_{d} étant des nombres rationnels compris entre 0 et 1.

La Figure 9 illustre que les coordonnées de départ (x_{d}, y_{d}) constituent le centre d'un noyau de filtre [KRNL]. La taille du noyau de filtre [KRNL] illustré à la Figure 9 est de 4 fois 4 positions. Le noyau de filtre [KRNL] se trouve dans le bloc de valeur d'entrée [IV] concernée. Ceci implique que le noyau de filtre [KRNL] comprend typiquement 16 valeurs d'entrée Y. Il convient de noter qu'une ou plusieurs valeurs d'entrée Y peuvent être non-valides. Il est rappelé que les valeurs d'entrée booléennes indiquent quelles valeurs d'entrée sont valides et quelles sont non-valides.

Le processeur [PRC] établit une combinaison pondérée des valeurs d'entrée Y valides dans le noyau de filtre [KRNL]. Les facteurs de pondération dépendent de la partie fractionnelle (Δx_{d}, Δy_{d}) des coordonnées de départ (x_{d}, y_{d}). La combinaison pondérée constitue la valeur de contribution Y [CV/Y]. Le processeur [PRC] établit les valeurs de contribution U, V et A selon le même procédé. La valeur de contribution booléenne est typiquement la valeur d'entrée booléenne la plus proche du centre du noyau de filtre [KRNL]. La valeur de contribution booléenne indique si les valeurs de contribution U, V et A doivent être prises en compte dans la suite.

Dans la première étape de composition [COMF1], illustrée à la Figure 6, le processeur [PRC] effectue un balayage de la zone qu'occupe la tuile [TL] dans l'espace d'arrivée comme décrit précédemment, Pour chaque position (xₐ, yₐ), le processeur [PRC] établit des valeurs de contribution Y, U, V et A et une valeur de contribution booléenne à partir du premier bloc de valeurs d'entrée [IV1] comme décrit en référence à la Figure 9.

Si la valeur de contribution booléenne indique que les valeurs de contribution Y, U, V et A sont valides, le processeur [PRC] établit des combinaisons pondérées de la valeur de contribution Y, U et V avec respectivement un échantillon de fond Y, U et V provenant de la tuile de fond [BGTL] ayant la même position (xₐ, yₐ). Les résultats de ces combinaisons pondérées constituent des premiers échantillons intermédiaires Y, U et V. La valeur de contribution A détermine les facteurs de pondération. Si la valeur de contribution booléenne indique que les valeurs de contribution Y, U, V et A sont non-valides, les échantillons de fond Y, U et V provenant de la tuile de fond [BGTL] constituent des premiers échantillons intermédiaires Y, U et V. Ainsi, le processeur [PRC] établit des premiers échantillons intermédiaires Y, U et V pour chaque position (xₐ, yₐ). A la fin du balayage, l'ensemble des premiers échantillons intermédiaires Y, U et V constituent la première tuile intermédiaire [PTL1] illustrée à la Figure 6.

Dans la deuxième étape de composition [COMP2] et la troisième étape de composition [COMP3], illustrée à la Figure 6, le processeur [PRC] effectue essentiellement les mêmes opérations qu'elle effectue dans la première étape de composition [COMF1] décrites précédemment. Dans la deuxième étape de composition [COMP2], le deuxième bloc de valeurs d'entrée [IV2] prend la place du premier bloc de valeurs d'entrée [IV1]. La première tuile intermédiaire [PTL1] prend la place de la tuile de fond [BGTL] et, ainsi, les premiers échantillons intermédiaires prennent la place des échantillons de fond. Le processeur [PRC] établit des deuxièmes échantillons intermédiaires Y, U et V pour chaque position (xₐ, yₐ). A la fin du balayage, les deuxièmes échantillons intermédiaires Y, U et V constituent la deuxième tuile intermédiaire [PTL2] illustrée à la Figure 6.

Dans la troisième étape de composition [COMP3], le troisième bloc de valeurs d'entrée [IV3] prend la place du premier bloc de valeurs d'entrée [IV1] utilisé dans la première étape de composition [COMP1]. La deuxième tuile intermédiaire [PTL2] prend la place de la tuile de fond [BGTL] et, ainsi, les deuxièmes échantillons intermédiaires prennent la place des échantillons de fond. Le processeur [PRC] établit des échantillons d'image Y, U et V pour chaque position (xₐ, yₐ). A la fin du balayage, les échantillons d'images Y, U et V constituent la tuile [TL] illustrée à la Figure 6.

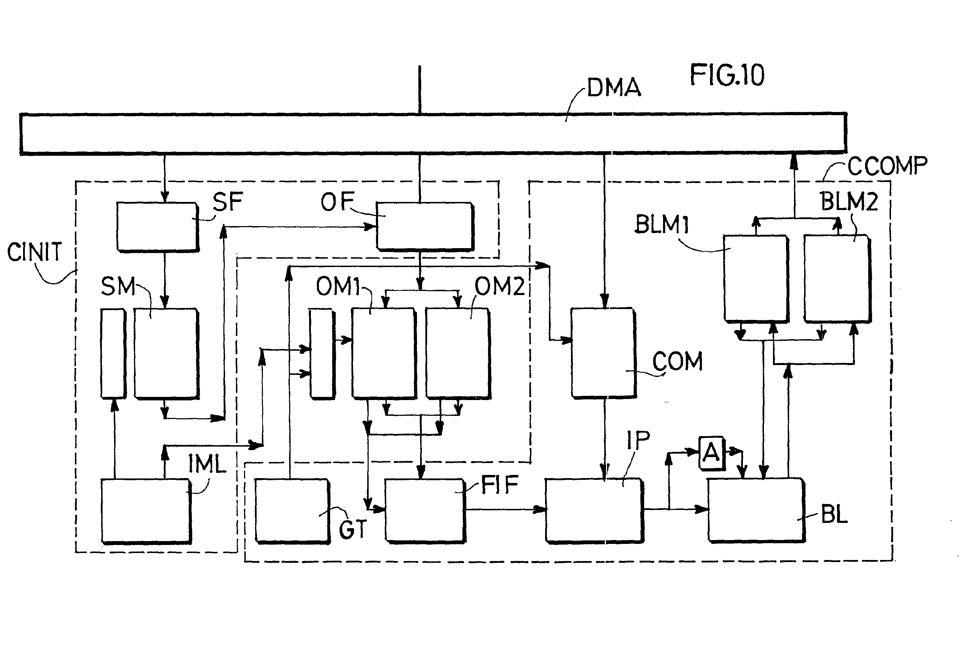

La Figure 10 illustre le processeur [PRC]. Le processeur [PRC] comprend un circuit d'accès mémoire [DMA], un circuit d'initialisation [CINIT], deux mémoires d'objet [OM] et un circuit de composition [CCOMP]. Plus en détail, le circuit d'initialisation [CINIT] comprend un formateur de forme [SF], une mémoire de forme [SM], un formateur de d'objet [OF] et un circuit de contrôle interne [IML]. Le circuit de composition [CCOMP] comprend un circuit de transformation géométrique [GT], un formateur de filtre [FIF], une mémoire de coefficients [COM], un circuit d'interpolation [IP] et un circuit de mélange [BL] et deux mémoires de mélange [BLM]. Les blocs sans signe de référence auprès des mémoires internes [SM, OM1, OM2] représentent des circuits de contrôle de mémoire.

Le circuit d'initialisation [CINIT] effectue les étapes d'initialisation [INIT] illustrées à la Figure 6. Les deux mémoires d'objet [OM] servent à stocker temporairement les blocs de valeurs d'entrée [IV] illustrées à la Figure 6. Le processeur [PRC] fait une association entre une adresse dans l'une et l'autre mémoire d'objet [OM] et une position (x_{d}, y_{d}) dans l'espace de départ [DEP] illustré à la Figure 4. Le circuit de composition [CCOMP] effectue les étapes de composition [COMP] illustrées à la Figure 6. Les deux mémoires de mélange [BLM] servent à stocker temporairement la tuile de fond [BGTL], la première tuile intermédiaire [PTL1], la deuxième tuile intermédiaire [PTL2] et la tuile [TL]. Le processeur [PRC] fait une association entre une adresse dans l'une et l'autre mémoire de mélange [BLM] et une position (xₐ, yₐ) dans l'espace de d'arrivée [ARR] illustré à la Figure 4.

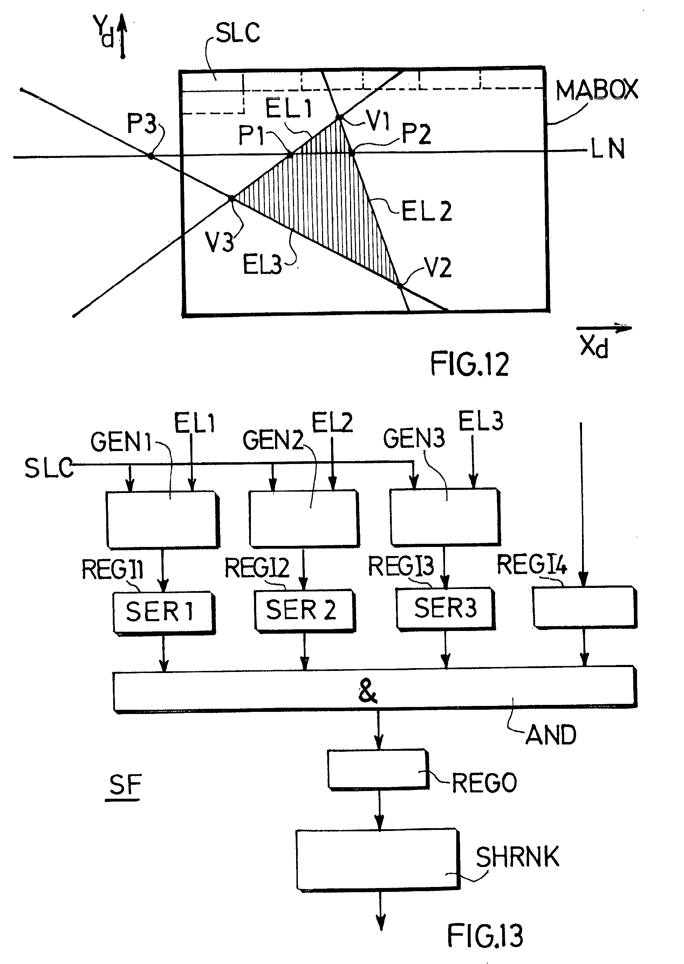

La Figure 11 illustre le fonctionnement du circuit de contrôle interne [IML] illustré à la Figure 10. Le circuit de contrôle interne [IML] reçoit du contrôleur [CNTRL] illustré à la Figure 3 des paramètres de contrôle définissant un cadre rectangulaire [BBOX]. Ce cadre rectangulaire [BBOX] encadre la tuile inverse [ITL] concernée comme expliqué précédemment en référence à la Figure 5.

Le circuit de contrôle interne [IML] établit un cadre rectangulaire étendu [EBBOX] à partir du cadre rectangulaire [BBOX] et du noyau de filtre [KRNL] qu'applique le circuit d'interpolation [IP]. La notion noyau de filtre [KRNL] a déjà été expliquée en référence à la Figure 9. Le cadre rectangulaire étendu [EBBOX] comprend toutes les valeurs qui peuvent être comprises dans le noyau en déplaçant le centre du noyau de filtre [KRNL] dans le cadre rectangulaire [BBOX].

Le circuit de contrôle interne [IML] étend le cadre rectangulaire étendu [EBBOX] afin d'obtenir un cadre rectangulaire aligné [MABOX] ayant une taille standard. Le cadre rectangulaire aligné [MABOX] désigne une certaine zone dans l'espace de départ. Le nombre de positions de cette zone dans la dimension horizontale et verticale est respectivement égale à P et Q fois le nombre de positions du bloc de valeurs d'entrée dans la dimension horizontale et verticale, P et Q étant des entiers. Par exemple, supposons que le bloc d'entrée comprend 32 fois 32 positions. Dans ce cas, le cadre rectangulaire aligné [MABOX] peut désigner une zone dans l'espace de départ comprenant, par exemple, 32 fois 32 positions, 32 fois 64 positions, 64 fois 32 positions ou 64 fois 32 positions. L'extension du cadre rectangulaire étendu [EBBOX] vers le cadre rectangulaire aligné [MABOX] facilite ainsi le remplissage des mémoires d'objets [OM] illustrée à la Figure 10.

La Figure 12 illustre un cadre rectangulaire aligné [MABOX] qui comprend la surface d'un élément graphique 3D. Des paramètres géométriques définissent la surface triangulaire. Les paramètres géométriques peuvent, par exemple, être les coordonnées des sommets des angles [V] de la surface triangulaire. Les paramètres géométriques définissent également trois lignes de bord: une première ligne de bord [EL1], une deuxième ligne de bord [EL2] et une troisième ligne de bord [EL3]. Une ligne de bord [EL] découpe le cadre rectangulaire aligné [MABOX] en deux parties: une partie qui ne comprend pas la surface et une autre partie qui comprend la surface.

Une ligne [LN] dans l'espace de départ est caractérisé par une coordonnée verticale (y_{d}). Sur chaque ligne, il existe trois points de ligne de bord: un premier point de ligne de bord [P1], un deuxième point de ligne de bord [P2] et un troisième point de ligne de bord [P3]. Le premier point de ligne de bord [P1] est la coordonnée horizontale (x_{d}) de la première ligne de bord [EL1] étant donnée la coordonnée verticale (y_{d}) de la ligne [LN]. Le deuxième point de ligne de bord [P2] et le troisième point de ligne de bord [P3] sont respectivement la coordonnée horizontale (x_{d}) de la deuxième ligne de bord [EL2] et la coordonnée horizontale (x_{d}) de la troisième ligne de bord [EL3] étant donnée la coordonnée verticale (y_{d}) de la ligne [LN].

Le formateur de forme [SF] balaye, en effet, le cadre rectangulaire aligné [MABOX] ligne par ligne. Plus en détail, le formateur de forme [SF] balaye une ligne tranche par tranche. Une tranche [SLC] est une série de M positions consécutives dans la dimension horizontale. Pour chaque tranche [SLC], le formateur de forme [SF] génère des valeurs d'entrée booléennes. La mémoire de forme [SM] sert à stocker temporairement les valeurs d'entrée booléennes. La génération de valeurs d'entrée booléennes a déjà été décrit d'une façon conceptuelle en référence aux Figures 7a-8c. Elle est encore décrite plus en détail dans ce qui suit.

Pour chaque différente tranche [SLC], le formateur de forme [SF] établit trois séries de valeurs booléennes. Le formateur de forme [SF] établit une première série de valeurs booléennes (SER1) à partir de la première ligne de bord [EL1], une deuxième série de valeurs booléennes (SER2) à partir de la deuxième ligne de bord [EL2] et une troisième série de valeurs booléennes (SER3) à partir de la troisième ligne de bord [EL3]. Une série (SER) comprend une valeur booléenne pour chaque position comprise dans la tranche [SLC]. Il a déjà été expliqué qu'une ligne de bord [EL] découpe le cadre rectangulaire aligné [MABOX] en deux parties. La valeur booléenne indique si la position concernée est dans l'une ou l'autre partie du cadre rectangulaire aligné [MABOX].

Le formateur de forme [SF] établit une série de valeurs booléennes comme suit. Le formateur de forme [SF] calcule la distance entre l'extrémité gauche de la tranche [SLC] et le point de ligne de bord [P] concerné. Cette distance sera nommée distance gauche (Dist_L) dans la suite. Le formateur de forme [SF] calcule également la distance entre l'extrémité droite de la tranche [SLC] et le point de ligne de bord [P] concerné. Cette distance sera nommée distance droite (Dist_R) dans la suite. La série de valeurs booléennes (SER) est une fonction (F) de la distance gauche et de la distance droite: SER = F(Dist_L, Dist_R).

Si la distance gauche (Dist_L) et la distance droite (Dist_R) ont le même signe, la série (SER) sera constituée de valeurs booléennes identiques. Cela veut dire que, en fonction de la signe, la série (SER) sera constituée exclusivement de valeurs booléennes étant égales à zéro (0) ou sera constituée exclusivement des valeurs booléennes étant égales à un (1). Si la distance gauche (Dist_L) et la distance droite (Dist_R) ont des signes opposée, le point de ligne de bord [P] se trouve, en effet, dans la tranche [SLC] concernée. Dans ce cas, la première partie de la série (SER) sera constituée de valeurs booléennes étant égales à zéro (0) et la deuxième partie sera constituée de valeurs booléennes étant égales à un (1), ou l'inverse. La taille de l'une et l'autre partie est une fonction (F) des distances gauche et droite (Dist_L, Dist_R).

La fonction (F) peut-être implémentée, par exemple, au moyen de circuit logique et une mémoire contenant un tableau. Dans ce cas, le tableau contient les différentes séries de valeurs booléennes possibles. Un circuit d'adressage sélectionne la cellule du tableau contenant la série de valeurs booléennes voulue en fonction des distances gauche et droite.

Le procédé suivant permet un calcul facile des distances gauche et droite. Le formateur de forme [SF] calcule les trois points de lignes de bord [P1, P2, P3] pour la première ligne du cadre rectangulaire aligné [MABOX]. L'extrémité gauche de la première tranche sur cette ligne se trouve sur la coordonnée horizontale de référence: x_{d}=0. Par conséquent, la distance gauche pour la première série de valeurs booléennes est égale au premier point de ligne de bord (Dist_L/SER1 = P1). La distance gauche pour la deuxième série de valeurs booléennes et celle pour la troisième série de valeurs booléennes sont respectivement égale au deuxième point de ligne de bord et au troisième point de ligne de bord (Dist_L/SER2 = P2; Dist_L/SER3 = P3). Pour les autres tranches de la ligne, la distance gauche (Dist_L) pour une série est égale à la distance droite (Dist_R) pour la même série ayant égard à la tranche précédente. La distance droite pour une série de valeurs booléennes est toujours égale à la distance gauche pour la même série minus M (Dist_R=Dist_L-M) M étant le nombre de positions comprises dans une tranche [SLC].

Le formateur de forme [SF] calcule les distances gauches (Dist_L) et les distances droites (Dist_R) pour les séries de valeurs booléennes sur la deuxième ligne et ceux sur les autres lignes comme suit. Le formateur de forme [SF] calcule l'inverse de la pente de chaque ligne de bord [EL]. Pour chaque série de valeurs booléennes sur une ligne, le formateur de forme [SF] prend la distance gauche (Dist_L) de la série de valeurs booléennes sur la ligne précédente ayant la même position horizontale. Ensuite, le formateur de forme [SF] ajoute à cette distance gauche (Dist_L) l'inverse de la pente. Le résultat ce calcul est la distance gauche (Dist_L) pour la série de valeurs booléennes sur la ligne courante. La distance droite pour une série de valeurs booléennes est toujours égale à la distance gauche pour la même série minus M (Dist_R=Dist_L-M).

La Figure 13 illustre quelques détails du formateur de forme [SF]. Le formateur de forme [SF] comprend trois générateurs de séries de valeurs booléennes [GEN], numérotés du premier au troisième [GEN1, GEN2, GEN3], quatre registres d'entrée [REGI], numérotées du premier au quatrième [REGI1, REGI2, REGI3, REGI4], un circuit logique ET [AND], un registre de sortie [REGO] et un circuit de compression [SHRNK].

Le premier générateur de série de valeurs booléennes [GEN1] génère la première série de valeurs booléennes (SER1) pour la tranche [SLC] concernée à partir de la première ligne de bord [EL1]. Le deuxième générateur de série de valeurs booléennes [GEN2] et le troisième générateur de série de valeurs booléennes [GEN3] génèrent respectivement le deuxième série de valeurs booléennes (SER2) et le troisième série de valeurs booléennes (SER3) pour la tranche concernée [SLC] à partir la deuxième ligne de bord [EL2] et la troisième ligne de bord [EL3]. Il est rappelé que les paramètres géométriques d'un élément graphique 3D définissent les lignes de bord [EL]. La génération des séries de valeurs booléennes (SER) se fait selon le procédé décrit précédemment. La première série de valeurs booléennes (SER1), la deuxième série de valeurs booléennes (SER2) et le troisième série de valeurs booléennes (SER3) sont respectivement placées dans le premier registre d'entrée [REGI1], le deuxième registre d'entrée [REGI2] et le troisième registre d'entrée [REGI3].

Le quatrième registre d'entrée [REGI4] sert à stocker des valeurs d'origine S provenant de l'ensemble de valeurs pour échantillons d'image concerné. Chaque tranche [SLC] désigne une série de M positions dans le cadre rectangulaire aligné [MABOX] illustré à la Figure 12. L'ensemble de valeurs pour échantillons d'image peut contenir une valeur d'origine S pour chaque position. Dans ce cas, le formateur de forme [SF] écrit les M valeurs d'origine S concernées dans le quatrième registre d'entrée [REGI4]. En revanche, il peut arriver qu'il y ait une ou plusieurs positions dans une tranche [SLC] pour lesquelles l'ensemble de valeurs pour échantillons d'image ne contient pas de valeurs d'origine S. Au moins une partie de la tranche [SLC] est, en effet, en dehors de l'ensemble de valeurs pour échantillons d'image. Dans ce cas, le formateur de forme [SF] écrit une valeur booléenne étant égale à zéro (0) dans le quatrième registre d'entrée [REGI4] pour chaque position en dehors de l'ensemble de valeurs pour échantillons d'image.

Si l'ensemble ne contient pas de valeurs d'origine S, le formateur de forme [SF] écrit dans le quatrième registre d'entrée [REGI4] une valeur booléenne étant égale à un (1) pour chaque position dans l'ensemble et une valeur booléenne étant égale à zéro (0) pour chaque position en dehors de l'ensemble. Le formateur de forme [SF] sait si une position est dans ou en dehors de l'ensemble de la façon suivante. Chaque position dans le cadre rectangulaire aligné [MABOX] illustré à la Figure 11 est associée à une adresse de mémoire. Le formateur de forme [SF] a accès à un tableau indiquant pour chaque ensemble de valeurs pour échantillons d'image, la zone de mémoire dans laquelle l'ensemble est stocké. Le formateur de forme [SF] détecte si l'adresse associée à une certaine position est dans la zone de mémoire dans laquelle l'ensemble concerné est stocké ou en dehors. Si l'adresse est en dehors de la zone, ce qui implique que la position est en dehors l'ensemble, le formateur de forme [SF] écrit une valeur booléenne étant égale à zéro (0) dans le quatrième registre d'entrée [REGI4].

Le circuit logique ET [AND] illustré à la Figure 13 combine les respectifs contenus des registres d'entrée [REGI] selon la fonction logique ET. En effet, pour chaque position dans le registre de sortie [REGO], le circuit logique ET [AND] prend de chaque registre d'entrée [REGI] la valeur booléenne ayant la même position et applique la fonction logique ET à ces valeurs booléennes. Le contenu du registre de sortie [REGO] constitue une série de valeurs d'entrée booléennes brute.

Le circuit de compression [SHRNK] fournit des valeurs d'entrée booléennes pour stockage dans la mémoire de forme [SM] à partir des valeurs d'entrée booléennes brutes contenues dans le registre de sortie [REGO]. Il a déjà été expliqué que le contrôleur [CNTRL] illustré à la Figure 3 peut définir un facteur de compression (N). Dans ce cas, le circuit de compression [SHRNK] divise, en effet, le registre de sortie [REGO] en groupes de N valeurs d'entrée booléennes brutes consécutives. Le circuit de compression [SHRNK] applique la fonction ET à chaque groupe afin d'obtenir une valeur d'entrée booléenne.

Par exemple, supposons que le registre de sortie [REG0] contienne aux positions 1, 2, 3 et 4 des valeurs d'entrée booléennes brutes qui sont respectivement égale à 1, 1, 1 et 0. Supposons en outre que le facteur de compression soit 2. Dans ce cas, le circuit de compression [SHRNK] applique la fonction ET aux valeurs d'entrée booléennes brutes aux positions 1 et 2 ce qui donne une valeur d'entrée booléenne qui égale à 1. Le circuit de compression [SHRNK] applique la fonction ET aux valeurs d'entrée booléennes brute aux positions 3 et 4 ce qui donne une valeur d'entrée booléenne qui égale à 0. S'il y n'a pas de facteur de compression, le circuit de compression [SHRNK] stocke la série de valeurs d'entrée booléennes brute telle quelle dans la mémoire de forme [SM].

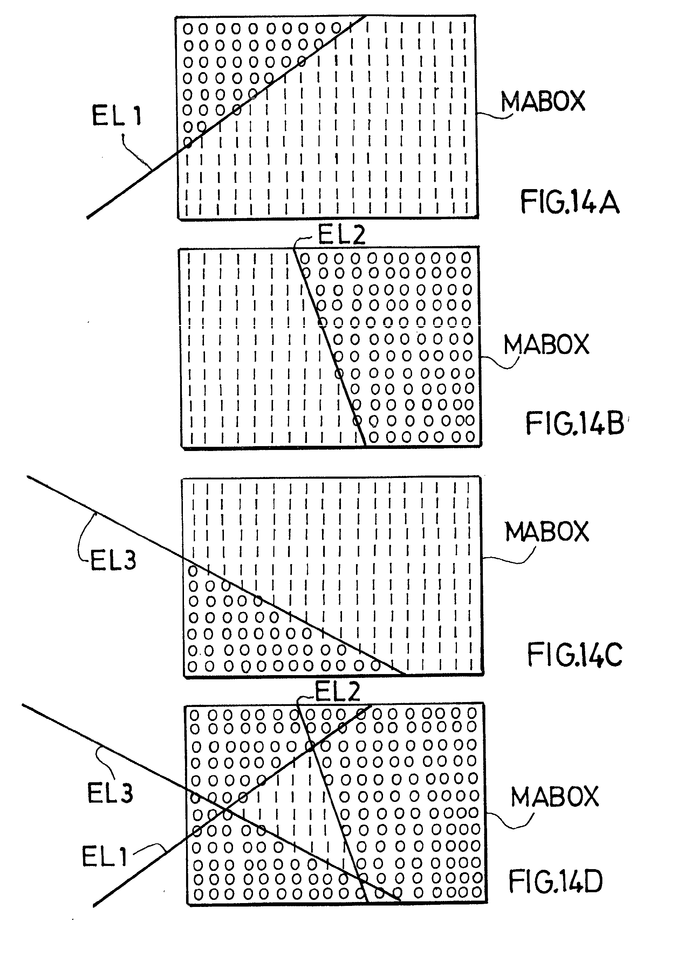

Les Figures 14a, 14b, 14c et 14d illustrent le fonctionnement du formateur de forme [SF]. Chaque Figure représente un espace correspondant au cadre rectangulaire aligné [MABOX]. Afin de rendre ces Figures simples, il est supposé que le cadre rectangulaire aligné [MABOX] comprenne 8 fois 8 positions. La première ligne de bord [EL1], la deuxième ligne de bord [EL2] et la troisième ligne de bord [EL3] déjà illustrées à la Figure 12 sont respectivement reproduites dans les Figures 14a, 14b et 14c. Ces lignes de bord définissent la surface déjà illustrée à la Figure 12. Cette surface est reproduite dans la Figure 14d.

Les Figures 14a, 14b et 14c illustrent respectivement l'ensemble des premières séries de valeurs booléennes, l'ensemble des deuxièmes séries de valeurs booléennes et l'ensemble des troisièmes séries de valeurs booléennes générées à l'égard du cadre rectangulaire aligné [MABOX]. La Figure 14d illustre le résultat obtenu en appliquant la fonction logique ET aux ensembles illustrés aux Figures 14a, 14b et 14c. Ce résultat constitue les valeurs d'entrée booléennes brute à partir desquelles les valeurs d'entrée sont établies en effectuant une compression si nécessaire.

Dans ce qui suit, le fonctionnement du formateur de d'objet [OF] illustré à la Figure 10 est décrit plus en détail. Le formateur de d'objet [OF] effectue à travers le circuit d'accès mémoire [DMA] une lecture dans la mémoire [MEM] illustré à la Figure 3. Cette lecture concerne les valeurs d'origine Y, U, V et A qui se trouvent dans la zone de l'espace de départ désignée par le cadre rectangulaire aligné [MABOX] illustré à la Figure 11. Le formateur de d'objet [OF] effectue également une lecture dans la mémoire de forme [SM]. Ainsi, le formateur de d'objet [OF] reçoit les valeurs d'entrée booléennes que le formateur de forme [SF] a généré à l'égard du cadre rectangulaire aligné [MABOX] comme décrit précédemment.

Le formateur de d'objet [OF] effectue plusieurs opérations. Premièrement, le formateur de d'objet [OF] effectue une conversion de format si le format de l'ensemble de valeurs pour échantillon d'image n'est pas selon le format 4:4:4. Deuxièmement, le formateur de d'objet [OF] effectue une compression si le contrôleur [CNTRL] définit un facteur de compression (N). Dans ce cas, le formateur de d'objet [OF] prend la moyenne de N valeurs d'origine voisines afin d'obtenir une valeur d'entrée. Troisièmement, le formateur de d'objet [OF] combine chaque valeur d'entrée booléenne avec la valeur d'entrée A (opacité) ayant la même position. Ainsi, le formateur de d'objet [OF] crée une valeur d'entrée combinée qui est stockée dans la mémoire d'objet [OM] concernée. La valeur d'entrée combinée contient donc un bit qui représente la valeur d'entrée booléenne. Les autres bits représentent la valeur d'entrée A (opacité).

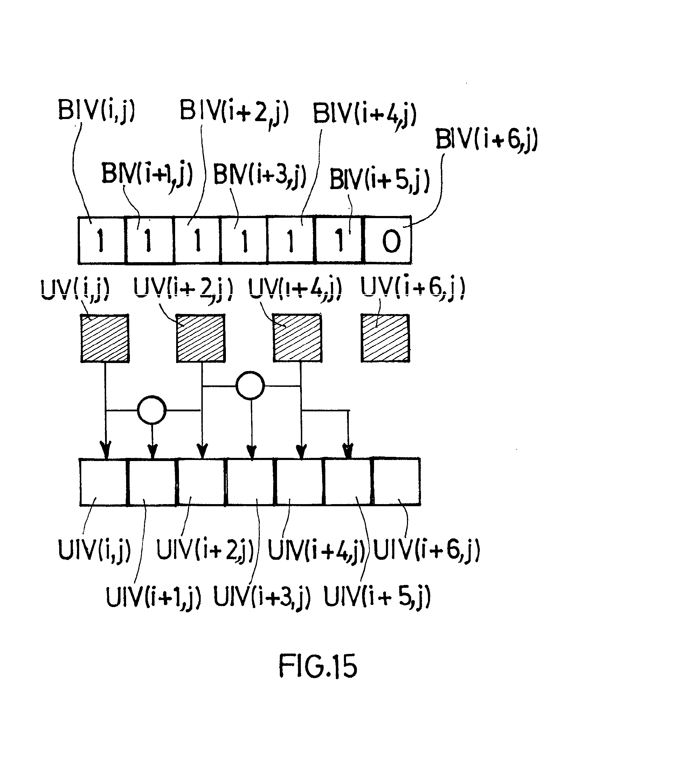

La Figure 15 illustre une conversion de format dans lequel les valeurs d'entrées booléennes jouent un rôle. La Figure 15 illustre quelques valeurs d'entrée booléennes [BIV(i,j)...BIV(i+6,j)] et quelques valeurs d'origine U [UV(i,j), UV(i+2,j), UV(i+4,j), UV(i+6,j)] que le formateur de d'objet [OF] reçoit. La Figure 15 illustre en outre quelques valeurs d'entrée U [UIV(i,j)...UIV(i+5,j)] que le formateur de d'objet [OF] écrit dans la mémoire d'objet [OM] concernée. Les signes entre parenthèses représentent la position de la valeur concernée sous forme de coordonnées de départ (x_{d}, y_{d}). Si une valeur d'entrée booléenne [BIV] est égale à un (1), celle-ci indique que la valeur d'entrée U [UIV] ayant la même position est valide. En revanche, si une valeur d'entrée booléenne [BIV] est égale à zéro (0), celle-ci indique que la valeur d'entrée U [UIV] ayant la même position n'est pas valide.

La Figure 15 illustre que pour certaines valeurs d'entrée U [UIV(i,j), UIV(i+2,j), UIV(i+4,j)] il existe une valeur d'origine U [UV(i,j), UV(i,j+2), UV(i,j+4)] de position correspondante. Chacune de ces valeurs d'entrée U [UIV(i,j), UIV(i+2,j), UIV(i+4,j)] est une copie littérale de la valeurs d'origine U [UV(i,j), UV(i,j+2), UV(i,j+4)] ayant la même position.

La Figure 15 illustre également que certaines valeurs d'entrée U [UIV(i+1,j), UIV(i+3,j), UIV(i+5,j)] remplissent, en effet, des trous entre les valeurs d'origine U [UV(i,j), UV(i,j+2), UV(i,j+4)]. Un trou peut se situer entre valeurs d'origine U [UV(i,j), UV(i+2,j)] qui sont valides. Dans ce cas, la valeur d'entrée U [UIV(i+1,j)] qui, en effet, remplit ce trou, est obtenue par interpolation entre les deux valeurs d'origine U [UV(i,j), UV(i+2,j)] concernées. En revanche, un trou peut se situer entre une valeur d'origine U [UV(i+4,j)] qui est valide et une valeur d'origine U [UV(i+6,j)] qui n'est pas valide. Dans ce cas, la valeur d'entrée U [UIV(i+5,j)] qui, en effet, remplit ce trou, est une copie littérale de la valeur d'origine U valide [UV(i+4,j)]. Ceci est fait pour que la valeur d'entrée U [UIV(i+5,j)] ne dépende pas de la valeur d'origine U non-valide [UV(i+6,j)].

Ce qui suit décrit plus en détail le fonctionnement du circuit de composition [CCOMP] illustrée à la Figure 10. Le circuit de transformation géométrique [GT] effectue le balayage de la zone qu'occupe la tuile concernée dans l'espace d'arrivée. Ce balayage a déjà été décrit précédemment par rapport aux étapes de composition [COMP] illustrées à la Figure 6. Pour chaque position (xₐ, yₐ), le circuit de transformation géométrique [GT] détermine la position du noyau de filtre [KRNL] comme expliqué précédemment en référence à la Figure 9. Le circuit de transformation géométrique [GT] amène le formateur de filtre [FIF] d'aller chercher dans la mémoire d'objet [OM] les valeurs d'entrée qui se trouvent dans le noyau de filtre [KRNL]. Le circuit de transformation géométrique [GT] amène en outre le circuit d'interpolation [IP] de lire les coefficients de filtre appropriés de la mémoire de coefficients [COM]. Les coefficients de filtre dépendent de la partie fractionnelle (Δx_{d}, Δy_{d}) des coordonnées de départ (x_{d}, y_{d}) qui définissent le centre de du noyau de filtre. Ceci a été expliqué précédemment en référence à la Figure 9.

Le formateur de filtre [FIF] illustré à la Figure 10 réarrange les valeurs d'entrée afin que leurs positions correspondent aux coefficients de filtre. En outre, le formateur de filtre [FIF] remplace toutes valeurs d'entrée non-valides par des valeurs basées sur des valeurs d'entrée valides. Ainsi, le formateur de filtre [FIF] empêche qu'une valeur d'entrée non-valide contribue à la tuile, ce qui autrement causera une distorsion. Il est rappelé que les d'entrée valeurs booléennes, qui sont comprises dans les valeurs d'entrée combinées, indiquent quelles valeurs d'entrée sont valides et quelles sont non-valides. Par exemple, le formateur de filtre [FIF] peut établir la valeur médiane de toutes les valeurs d'entrée Y valides dans le noyau du filtre. Ensuite, le formateur de filtre [FIF] remplace les valeurs d'entrée Y non-valides par la valeur médiane des valeurs d'entrée Y valides. Le formateur de filtre [FIF] fait pareil pour les valeurs d'entrée U, V et A.

Le circuit d'interpolation [IP] illustré à la Figure 10 comprend deux filtres de poly-phase (en anglais: polyphase filters): un premier filtre de poly-phase pour les valeurs d'entrée Y, U et V et un deuxième filtre de poly-phase pour les valeurs d'entrée combinées dont chacune comprend une valeur d'entrée A et une valeur d'entrée booléenne. Chaque filtre comprend 4 fois 4 prises. Chaque prise est associée à un coefficient de filtre et une valeur d'entrée. Le premier filtre de poly-phase établit une combinaison pondérée des valeurs d'entrée que le formateur de filtre [FIF] lui fournit. Ainsi, ce filtre établit des valeurs de contribution Y, U et V. Le deuxième filtre de poly-phase dérive une valeur de contribution A et une valeur de contribution booléenne à partir des valeurs d'entrée combinée dans le noyau du filtre.

Le circuit de mélange [BL] sélectionne une des deux mémoires de mélange [BLM1, BLM2] pour composer la tuile. Ainsi, la tuile de fond [BGTL], les tuiles intermédiaires [PTL] et la tuile [TL] illustrées à la Figure 6 sont temporairement stockées dans la mémoire de mélange [BLM1, BLM2] sélectionnée. L'autre mémoire de mélange [BLM2, BLM1] sera sélectionnée pour composer la prochaine tuile, et cetera. Les mémoires de mélange [BLM1, BLM2] sont des mémoires à doubles ports. Ainsi, le circuit de mélange [BL] peut lire une donnée d'une mémoire de mélange et, en même temps, écrire une donnée dans la même mémoire de mélange.

Le circuit de mélange [BL] reçoit du circuit d'interpolation [IP] des valeurs de contribution Y, U, V et A et une valeur de contribution booléenne pour chaque position (xₐ, yₐ) de la tuile à composer. Le circuit de mélange [BL] va chercher dans la mémoire de mélange [BLM1, BLM2] sélectionnée les échantillons Y, U et V ayant la même position (xₐ, yₐ).

Le circuit de mélange [BL] vérifie au moyen de la valeur de contribution booléenne si les valeurs de contribution Y, U, V et A sont valides ou non-valides. Si les valeurs de contribution Y, U, V et A sont valides, le circuit de mélange [BL] établit des combinaisons pondérées de la valeur de contribution Y, U et V avec respectivement l'échantillon Y, U et V provenant de la mémoire de mélange sélectionnée [BLM1, BLM2]. La valeur de contribution A détermine les facteurs de pondération. Les résultats de ces combinaisons pondérées constituent des nouveaux échantillons Y, U et V. Le circuit de mélange [BL] écrit ces nouveaux échantillons dans la mémoire de mélange [BLM1, BLM2] sélectionnée. Si les valeurs de contribution Y, U, V et A sont non-valides, le circuit de mélange [BL] re-écrit dans la mémoire de mélange [BLM2, BLM1] sélectionnée, les échantillons Y, U, V lus de cette même mémoire auparavant. Dans ce cas, le nouvel échantillon Y, U et V est respectivement égale à l'ancien échantillon Y, U et V.

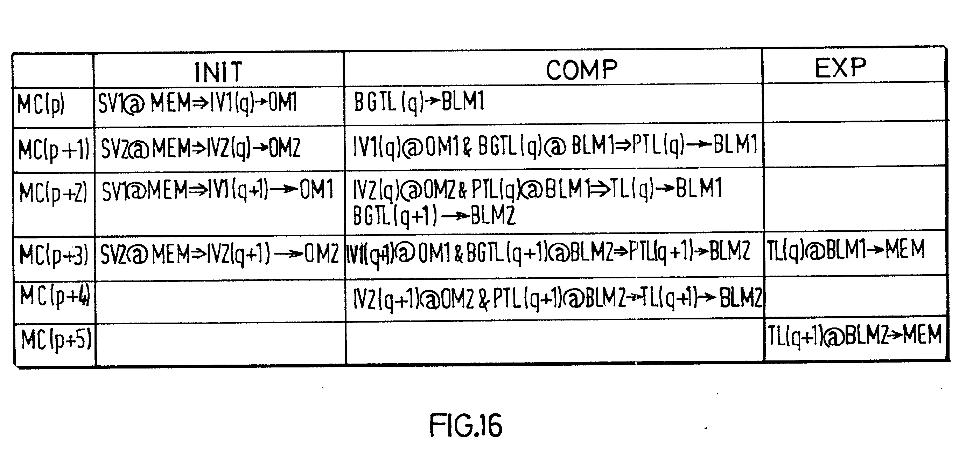

La Figure 16 illustre sous forme d'un tableau le fonctionnement du processeur [PRC] illustré à la Figure 10. Les lignes du tableau représentent des macrocycles numérotés du p ième au p+5 ième [MC(p) - MC(p+5)]. Un macrocycle est un intervalle de temps comprenant un certain nombre de cycles d'horloge. Les colonnes du tableau représentent les différentes étapes pour générer une tuile. L'étape d'initialisation [INIT] et l'étape de composition [COMP] ont été décrites précédemment en référence à la Figure 6. La Figure 16 illustre en outre une étape d'expédition [EXP].

La Figure 16 illustre la génération de deux tuiles: une q ième tuile [TL(q)] et une q+1 ième tuile [TL(q+1)]. Le processeur [PRC] génère chacune de ces tuiles à partir d'un premier ensemble de valeurs pour échantillon d'image [SV1] et un deuxième ensemble de valeurs pour échantillon d'image [SV2].

Dans le p ième macrocycle [MC(p)], le circuit d'initialisation [CINIT] génère un premier bloc de valeurs d'entrée pour la q ième tuile [IV1(q)] à partir du premier ensemble de valeurs pour échantillon d'image [SV1]. Ce bloc [IV1(q)] est stocké dans la première mémoire d'objet [OM1]. En même temps, le circuit de composition [CCOMP] place des échantillons de fond pour la q ième tuile [BGTL(q)] dans la première mémoire de mélange [BLM1].

Dans le p+1 ième macrocycle [MC(p+1)], le circuit d'initialisation [CINIT] génère un deuxième bloc de valeurs d'entrée pour la q ième tuile [IV2(q)] à partir du deuxième ensemble de valeurs pour échantillon d'image [SV2]. Ce bloc [IV2(q)] est stocké dans la deuxième mémoire d'objet [OM2]. En même temps, le circuit de composition [CCOMP] lit le premier bloc de valeurs d'entrée pour la q ième tuile [IV1(q)] de la première mémoire d'objet [OM1] et, à partir de ce bloc, génère des valeurs de contributions. Le circuit de composition [CCOMP] combine les valeurs de contributions et les échantillons de fond pour la q ième tuile [BGTL(q)] pour former des échantillons d'image intermédiaires pour la q ième tuile [PTL(q)]. Ces échantillons d'image intermédiaires [PTL(q)] sont stockés dans la première mémoire de mélange [BLM1].

Dans le p+2 ième macrocycle [MC(p+2)], le circuit d'initialisation [CINIT] génère un premier bloc de valeurs d'entrée pour la q+1 ième tuile [IV1(q+1)] à partir du premier ensemble de valeurs pour échantillon d'image [SV1]. Ce bloc [IV1(q+1)] est stocké dans la première mémoire d'objet [OM1]. En même temps, le circuit de composition [CCOMP] lit le deuxième bloc de valeurs d'entrée pour la tuile q ième tuile [IV2(q)] de la deuxième mémoire d'objet [OM2] et, à partir de ce bloc, génère des valeurs de contributions. Le circuit de composition [CCOMP] combine les valeurs de contributions et les échantillons intermédiaires pour la q ième tuile [PTL(q)] qui sont stockés dans la première mémoire de mélange [BLM1]. Ainsi, le circuit de composition [CCOMP] génère des échantillons d'image pour la q ième tuile [TL(q)]. Il stocke les échantillons d'image dans la première mémoire de mélange [BLM1]. Ainsi, la première mémoire de mélange [BLM1] contient la q ième tuile [TL(q)] à la fin du p+2 ième macrocycle [MC(p+2)]. Finalement, le circuit de composition [CCOMP] place des échantillons de fond pour la q+1 ième tuile [BGTL(q+1)] dans la deuxième mémoire de mélange [BLM2].

Dans le p+3 ième macrocycle [MC(p+3)], le circuit d'initialisation [CINIT] génère un deuxième bloc de valeurs d'entrée pour la q+1 ième tuile [IV2(q+1)] à partir du deuxième ensemble de valeurs pour échantillon d'image [SV2]. Ce bloc [IV2(q+1)] est stocké dans la deuxième mémoire d'objet [OM2]. En même temps, le circuit de composition [CCOMP] lit le premier bloc de valeurs d'entrée pour la tuile q+1 ième tuile [IV1(q+1)] de la première mémoire d'objet [OM1] et, à partir de ce bloc, génère des valeurs de contributions. Le circuit de composition [CCOMP] combine les valeurs de contributions et les échantillons de fond pour la q+1 ième tuile [BGTL(q+1)] pour former des échantillons intermédiaires pour la q+1 ième tuile [PTL(q+1)]. Ces échantillons d'image intermédiaires sont stockés dans la deuxième mémoire de mélange [BLM2]. Le processeur [PRC] transfert la q ième tuile [TL(q)] de la première mémoire de mélange [BLM1] vers la mémoire [MEM] illustré à la Figure 3.

Dans le p+4 ième macrocycle [MC(p+4)], le circuit d'initialisation [CINIT] lit un deuxième bloc de valeurs d'entrée pour la tuile q+1 ième tuile [IV2(q+1)] de la deuxième mémoire d'objet [OM2] et, à partir de ce bloc, génère des valeurs de contributions. Le circuit de composition [CCOMP] combine les valeurs de contributions et les échantillons intermédiaires pour la q+1 ième tuile [PTL(q+1)] qui sont stockés dans la deuxième mémoire de mélange [BLM2]. Ainsi, le circuit de composition [CCOMP] génère des échantillons d'image pour la q+1 ième tuile [TL(q+1)]. Il stocke les échantillons d'image dans la deuxième mémoire de mélange [BLM2]. Ainsi, la deuxième mémoire de mélange [BLM2] contient la q+1 ième tuile [TL(q+1)] à la fin du p+4 ième macrocycle [MC(p+4)]. Dans le p+5 ième macrocycle [MC(p+5)], le processeur [PRC] transfert la q+1 ième tuile [TL(q+1)] de la deuxième mémoire de mélange [BLM2] vers la mémoire [MEM] illustré à la Figure 3.

Donc, dans un seul macro cycle, le processeur [PRC] peut effectuer trois différentes étapes: initialisation [INIT], composition [COMP] et expédition [EXP]. La première mémoire d'objet [OM1] et la deuxième mémoire d'objet [OM2] opèrent en mode "bascule"(en anglais: "flip-flop" mode) au rythme des macrocycles [MC]. Dans un certain macrocycle, une de ces deux mémoires est un récepteur de données tandis que l'autre mémoire est un émetteur de données. En principe, les rôles sont inversés chaque macrocycle [MC]. La première mémoire de mélange [BLM1] et la deuxième mémoire de mélange [BLM2] opèrent également en mode "bascule" mais au rythme des tuiles [TL]. Le processeur [PRC] utilise une de ces deux mémoires pour composer une certaine tuile et il utilise l'autre mémoire pour composer la tuile suivante.

Le dispositif de composition d'image décrit précédemment en référence aux Figures 3-16 est un exemple d'implémentation des caractéristiques illustrées dans la Figure 1. L'ensemble d'échantillons d'image [IS] illustré à la Figure 1 prend la forme d'une tuile [TL] illustré à la Figure 5. L'ensemble de valeurs pour échantillons d'image [SV] illustré à la Figure 1 prend la forme des valeurs d'origine Y, U, V et A contenues dans le cadre rectangulaire aligné [MABOX] illustré à la Figure 11. Les paramètres géométriques illustrés à la Figure 1 prennent la forme de paramètres géométriques d'un élément graphique 3D illustré à la Figure 12. Le formateur de forme [SF] illustré à la Figure 10 génère un cache sous forme d'un ensemble de valeurs booléennes illustré à la Figure 14d. Ces valeurs booléennes sont associées aux valeurs d'origine Y, U, V et A contenues dans le cadre rectangulaire aligné [MABOX]. Elles empêchent que certaines valeurs d'origine Y, U, V et A sont projetées sur la tuile [TL].

La description ci-dessus en référence aux différentes Figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

Il existe de nombreuses manières pour composer une image selon l'invention. Le dispositif illustré à la Figure 3 compose une image par génération successive de tuiles. En principe, il est également possible de composer une image, par exemple, en un seul coup. Ceci est possible si les mémoires internes [SM, OM, BLM] du processeur illustré à la Figure 10 sont suffisamment larges.

Un cache généré selon l'invention peut représenter nombreuses formes. Le cache illustré à la Figure 14d représente un triangle. En principe, un cache généré selon l'invention peut représenter n'importe quel polygone. Par exemple, il suffit d'ajouter un générateur de séries de valeurs booléennes [GEN] au formateur de forme [SF] illustré à la Figure 13 pour générer un cache représentant une forme quadrangulaire.

Il existe de nombreuses manières pour implémenter des fonctions au moyen d'articles physiques (en anglais: items of hardware) ou de logiciels (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Par exemple, le processeur illustré à la Figure 10 comprend différents blocs qui, en combinaison, génèrent des tuiles. En principe, il est possible d'implémenter ces blocs au moyen d'un circuit d'ordinateur convenablement programmé. Un jeu d'instructions contenu dans une mémoire de programmation peut provoquer le circuit d'ordinateur à effectuer les différentes opérations décrites précédemment en référence aux Figures 3-16. Le jeu d'instructions peut être chargé dans la mémoire de programmation par la lecture d'un support de données comme, par exemple, un disque qui contient le jeu d'instructions. La lecture peut s'effectuer par l'intermédiaire d'un réseau de communication comme, par exemple, le réseau Internet. Dans cas, un fournisseur de service (en anglais: service provider) mettra le jeu d'instructions à la disposition des intéressées.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Procédé pour composer une image dans lequel un ensemble d'échantillons d'image [IS] est établi à partir d'un ensemble de valeurs pour échantillons d'image [SV] et des paramètres géométriques [V], le procédé comprenant les étapes suivantes:
- une étape d'initialisation [INIT] dans laquelle un cache [MSK] est généré à partir des paramètres géométriques [V];
- une étape de projection [MAP] dans laquelle l'ensemble de valeurs pour échantillons d'image [SV] est projeté sur un ensemble d'échantillons d'image [IS], le cache [MSK] intervenant dans cette projection.

2. Procédé selon la revendication 1, dans lequel le cache est sous forme d'un ensemble de valeurs booléennes [BV], l'ensemble de valeurs booléennes [BV] étant associé à l'ensemble de valeurs pour échantillons d'image [SV] et définissant un sous-ensemble [SUBS] dans celui-ci, l'ensemble de valeurs booléennes [BV] empêchant la projection des valeurs pour échantillons d'image qui n'appartiennent pas au sous-ensemble [SUBS].

3. Dispositif de composition d'image comprenant un processeur pour établir un ensemble d'échantillons d'image [IS] à partir d'un ensemble de valeurs pour échantillons d'image [SV] et des paramètres géométriques [V], le processeur étant disposé pour effectuer les étapes suivantes:
- une étape d'initialisation [INIT] dans laquelle un cache [MSK] est généré à partir des paramètres géométriques [V];
- une étape de projection [MAP] dans laquelle l'ensemble de valeurs pour échantillons d'image [SV] est projeté sur un ensemble d'échantillons d'image [IS], le cache [MSK] intervenant dans cette projection.

4. Produit "programme d'ordinateur" pour un dispositif de composition d'image, le produit "programme d'ordinateur" comprenant un jeu d'instructions qui, quand il est chargé dans le dispositif de composition d'image, amène un processeur à établir un ensemble d'échantillons d'image [IS] à partir d'un ensemble de valeurs pour échantillons d'image [SV] et des paramètres géométriques [V] en effectuant les étapes suivantes:
- une étape d'initialisation [INIT] dans laquelle un cache [MSK] est généré à partir des paramètres géométriques [V];
- une étape de projection [MAP] dans laquelle l'ensemble de valeurs pour échantillons d'image [SV] est projeté sur un ensemble d'échantillons d'image [IS], le cache [MSK] intervenant dans cette projection.
